# EUROPÄISCHE PATENTSCHRIFT

(11) **EP 2 614 599 B1**
(45) Veröffentlichungstag und Bekanntmachung des Hinweises auf die Patenterteilung: **01.03.2017**
(21) Anmeldenummer: 11784592.5
(22) Anmeldetag: 07.11.2011
(51) Int. Cl.: H05B 37/02, H02J 13/00, H04B 3/54

(54) **ELEKTRISCHES INSTALLATIONSGERÄT**
ELECTRIC INSTALLATION DEVICE
APPAREIL D'INSTALLATION ÉLECTRIQUE

(30) Priorität: 08.11.2010 DE 102010050748
(43) Veröffentlichungstag der Anmeldung: 17.07.2013
(73) Patentinhaber: Schneider Electric Industries SAS, 92500 Rueil-Malmaison (FR)
(72) Erfinder: KUHNERT, Jürgen, 51702 Bergneustadt (DE); HERRMANN, Bernd-Peter, 51645 Gummersbach (DE); NYMAN, Peick, FIN-02700 Grankulla (FI)
(74) Vertreter: Manitz, Finsterwald & Partner GbR
(86) Internationale Anmeldenummer: PCT/EP2011/005585
(87) Internationale Veröffentlichungsnummer: WO 2012/062440

(56) Entgegenhaltungen:
- EP-A2- 0 854 668
- WO-A2-2011/076387
- DE-A1- 19 940 273
- DE-A1-102008 055 728
- "The One-Single-Standard for the integration of Home and Building applications", KNX SYSTEM ARCHITECTURE, KONNEX ASSOCIATION, BE, 1. April 2003 (2003-04-01), Seiten 1-32, XP007919039,

## Beschreibung

Die Erfindung betrifft ein elektrisches Installationsgerät nach dem Oberbegriff des Patentanspruchs 1 (vgl. DE 199 40 273 A1).

Im Rahmen der Gebäudeinstallationstechnik existieren verschiedene elektrische Installationssysteme, um die Energieversorgung von elektrischen Lasten zu steuern. Bei einem weit verbreiteten Installationssystem werden in elektrischen Versorgungsleitungen von Lasten Installationsgeräte angeordnet, über die die Lasten direkt und nach unterschiedlichsten Kriterien manuell oder automatisch ansteuerbar sind.

Zur regelbaren Ansteuerung von elektrischen Lasten, insbesondere Beleuchtungen, können spezielle Installationsgeräte, sogenannte Dimmer, genutzt werden. Eine Unterscheidung zwischen Schalten und Dimmen kann durch kurze und lange Betätigungszeiten erreicht werden. Ein einer Betätigungsaktion angepasster Spannungspegel wird als analoges Lastsignal an die Last übertragen und bewirkt eine entsprechende Ansteuerung der Last.

Besonders komfortable Dimmer können in verschiedenen Betriebsmodi betrieben werden, um an demselben Installationsgerät unterschiedliche Lastarten, z. B. ohmsche, induktive oder kapazitive Lasten, anschließen zu können. Vorteilhafterweise kann eine Detektierung der Lastart und die Auswahl des geeigneten Betriebsmodus automatisch erfolgen, wobei die entsprechenden Bauteile in den Dimmer integriert sind.

Aus der EP 0 854 668 A2 ist ein EIB-Gerät zum Einbau in einer Installationsdose bekannt, bei dem einerseits ein Busanschluss und andererseits ein Netzanschluss sowie Verbraucheranschlüsse durch eine Schaltungsträgerplatte voneinander getrennt sind, die einen rechten Winkel mit einer weiteren Schaltungsträgerplatte einschließt.

Aus der Druckschrift "The One-Single-Standard for the integration of Home and Building applications", KNX SYSTEM ARCHITECTURE, KON-NEX ASSOCIATION, BE, 1. April 2003, Seiten 1 - 32, XP007919039 ist ein Protokoll für den KNX-Standard bekannt.

Zur störungsfreien regelbaren Ansteuerung von Beleuchtungen mit einer technisch bedingt vorgeschalteten und vorzugsweise integrierten Baueinheit, z. B. Kompaktleuchtstofflampen, wird neben dem Lastsignal zusätzlich ein Steuersignal benötigt. Um ein vorhandenes Leitungsnetz beim Austausch der Beleuchtungen unverändert weiter nutzen zu können, kann mit einem speziellen Installationsgerät über das Leitungsnetz neben dem Lastsignal zusätzlich ein Telegramm zur Leistungsregelung von derartigen Lasten gesendet werden.

Eine Betätigungsaktion löst in dem Installationsgerät in einer Kodierungseinheit eine Generierung und Aufmodulierung eines entsprechenden Telegramms auf das originäre Lastsignal aus. Das derartig aufbereitete Lastsignal wird über das Leitungsnetz zur Last übertragen. In der integrierten Baueinheit der Last wird in einem Dekodierer das Telegramm aus dem aufbereiteteten Lastsignal separiert, entschlüsselt und einer nachgeschalteten Regelbaugruppen zugeführt, die dann die Last unter Verwendung des originären Lastsignals entsprechend ansteuert.

Die Aufgabe der vorliegenden Erfindung besteht darin, ein elektrisches Installationsgerät zu schaffen, das bei gleicher Funktionalität und bei gleichbleibender Installationssituation zur regelbaren Ansteuerung von unterschiedlichen Lasttypen (mit und ohne Vorschaltgerät) verwendet werden kann.

Gelöst wird diese Aufgabe durch die im Patentanspruch 1 angegebenen Merkmale. Vorteilhafte Ausgestaltungen ergeben sich aus der Beschreibung, den Zeichnungen und den Unteransprüchen.

Die Erfindung weist den Vorteil auf, dass ein universell verwendbares elektrisches Installationsgerät geschaffen worden ist, das bei gleicher Funktionalität und bei gleichbleibender Installationssituation für unterschiedliche Lasttypen verwendet werden kann. Ein Installationssystem, bei dem Installationsgeräte und Lasten in einem Stromkreis angeordnet sind, kann unter Beibehaltung vorhandener Leitungssysteme und Funktionalitäten unverändert sowohl mit Lasten mit Vorschaltgerät als auch mit Lasten ohne Vorschaltgerät betrieben werden.

Einerseits kann das Installationsgerät im Rahmen einer Anpassung der Beleuchtung an energiesparende Kompaktleuchtstofflampen nachgerüstet werden, wobei vorhandene konventionelle Installationsgeräte (Dimmer) durch das erfindungsgemäße Installationsgerät ersetzt werden müssen. Andererseits kann das Installationsgerät auch bei einer Erstinstallation mit temporär unterschiedlichen Lasttypen verwendet werden.

Ein bestehendes, vorzugsweise 2-adriges, Leitungssystem zwischen Installationsgerät und einer Laststelle kann beim Wechsel des Lasttyps weiter genutzt werden. Eine Ergänzung, z. B. durch separate oder zusätzliche Steuerleitungen, ist nicht notwendig. In der bestehenden Verdrahtung kann die eine Ader zur beiderseitigen Spannungsversorgung genutzt werden, während die weitere Ader als Telegramm- und Lastleitung dienen kann. Darüber hinaus ist eine Verwendung des Installationsgerätes in einem 3-adrigen Leitungssystem möglich, wobei das Telegramm dann alternativ über eine separate Ader versendet werden kann.

Der prinzipielle Geräteaufbau kann die von konventionellen Installationsgeräten bekannte Struktur mit Bediensensorik, Montagevorrichtung und Gerätesockel aufweisen. Vorteilhafterweise können auch die Abmessungen an den Standard konventioneller Installationsgeräte angepasst sein, so dass eine Integration in die vorhandene Gerätesystematik möglich ist.

In dem Installationsgerät ist je eine Geräteeinheit mit einem Dimmer für eine Last ohne Vorschaltgerät und eine Geräteeinheit zum Dimmen für eine Last mit einer vorgeschalteten Baueinheit vorhanden, so dass mit einem einzigen Installationsgerät unterschiedliche Lasttypen ansteuerbar sind. Beide Geräteeinheiten sind mit der Bediensensorik elektrisch verbunden sein und können durch sie aktiviert werden.

Die erste Geräteeinheit kann ein Dimm-/Schaltmodul mit integrierter Lastarterkennung für die Ansteuerung einer Last ohne Vorschaltgerät umfassen. Die Lastarterkennung detektiert dabei ohmsche, induktive oder kapazitive Lasten und schaltet den entsprechenden Betriebsmodus automatisch ein.

Die zweite Geräteeinheit kann eine Baugruppe zur Erzeugung eines Telegramms und zur Aufmodulierung des Telegramms auf das originäre Lastsignal aufweisen, um eine Last mit Vorschaltgerät störungsfrei ansteuern zu können. Eine Bedienaktion löst innerhalb der Baugruppe zur Telegrammerzeugung, vorzugsweise unter Nutzung eines Mikroprozessors, eine Generierung digitaler Signale aus, die über die vorhandene Ader als aufmoduliertes Telegramm an die Last übertragen werden. In der integrierten Baueinheit der Last kann eine Separierung und Dekodierung des Telegramms und eine entsprechende Ansteuerung der Last über ein integriertes Dimmmodul erfolgen. Das Telegramm kann unidirektional in Richtung der empfangenden Last verschickt werden. Der Informationsgehalt des Telegramms ermöglicht eine eindeutige Auswertung, so dass die angeschlossene Last in beabsichtigter Weise durch das Dimmmodul angesteuert werden kann.

Das Telegramm kann eine Information über die Länge der Betätigung eines Bedienelementes beinhalten. In einer komfortablen Ausführung kann zumindest ein Installationsgerät mehrere Bedienelemente aufweisen. Neben Bedienelementen für das Auf- und Abdimmen können zusätzlich Bedienelemente für die Aktivierung von nutzerdefinierten Lasteinstellungen geschaffen werden. In diesem Fall kann das Telegramm Informationen zur Identifizierung des jeweiligen Bedienelementes enthalten.

In einer bevorzugten Ausführungsform ist in dem Installationsgerät eine Baueinheit für die Wahl der zu nutzenden Geräteeinheit integriert. Dies kann manuell durch den Nutzer mittels eines Schalters erfolgen. In einer komfortablen Ausführung erfolgt dies automatisch, wobei eine Elektronik den angeschlossenen Lasttyp detektiert und automatisch die entsprechende Geräteeinheit für den Betrieb auswählt.

Die Energieversorgung des Installationsgerätes erfolgt über das Leitungssystem und die daran angeschlossene Last. Die Konfiguration der Bauteile bei einer Last mit Vorschaltgerät kann so gewählt werden, dass die zur Verfügung stehende Energiemenge die notwendigen Funktionen hinreichend gewährleistet. Die Energieversorgung kann stetig, vorteilhafterweise auch während einer Telegrammübertragung, erfolgen. Eine separate oder andere Spannungsversorgung ist nicht notwendig.

Die beiden Geräteeinheiten sind körperlich in einem gemeinsamen Gehäuse angeordnet, wobei eine integrale Baugruppe oder zwei modulare Baugruppen möglich sind, die lösbar miteinander verbunden sein können. Dadurch wird ein Austausch, eine Ergänzung oder eine Reparatur von Geräteeinheiten erleichtert.

Die Bediensensorik kann in einer bevorzugten Ausführungsform lösbar mit dem Gehäuse des Installationsgerätes verbunden sein, um den Austausch oder die Veränderung von Bedienfunktionen zu ermöglichen. In einer weiteren Ausgestaltung kann die Bediensensorik drahtlos mit dem Installationsgerät kommunizieren und ermöglicht eine komfortable dezentrale Bedienung. Rein funktional kann die Bediensensorik manuell zu betätigende Bedienelemente, z.B. Taster oder Schalter, oder unterschiedlichste Sensoren aufweisen, die eine Beleuchtungsansteuerung generieren.

Vorteilhafte Anwendungsbereiche des erfindungsgemäßen Installationssystems können sich im Bereich der Beleuchtungssteuerung ergeben.

Weitere Einzelheiten, Merkmale und Vorteile der Erfindung ergeben sich aus nachfolgender Beschreibung eines bevorzugten Ausführungsbeispieles anhand der Zeichnungen.

Es zeigen:
- Fig. 1: schematisch eine bekannte Schaltung,
- Fig. 2: schematisch eine erfindungsgemäße Schattung,
- Fig. 3: schematisch einen Aufbau eines Installationsgerätes.

Gleiche oder gleichwirkende Bauteile sind in der nachfolgenden Beschreibung mit gleichen Bezugszeichen versehen.

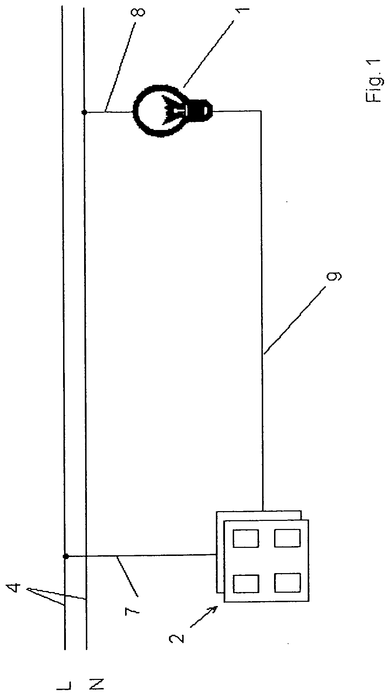

In der Figur 1 ist schematisch eine Schaltungsanordnung skizziert, die den Stand der Technik darstellt.

In Figur 1 ist eine herkömmliche Installationsschaltung dargestellt, bei der eine Last 1 ohne Vorschaltgerät, z. B. eine Glühlampe, über ein entfernt angeordnetes Installationsgerät in Form eines konventionellen Dimmers 2 geschaltet oder gedimmt werden kann. Die Helligkeit der angeschlossenen Last 1 kann am Installationsgerät 2 eingestellt werden. Das Installationsgerät 2 und die Last 1 sind über ein Leitungssystem 7, 8, 9 mit einer Spannungsversorgung 4 und untereinander verbunden. Bei einer Betätigung des Installationsgerätes 2 wird ein der Betätigungsdauer entsprechend geformtes Lastsignal an die Last 1 übertragen. Die Betätigungsdauer dient dabei als Kriterium für ein Ein- oder Ausschalten bzw. Aufoder Abdimmen der Last 1.

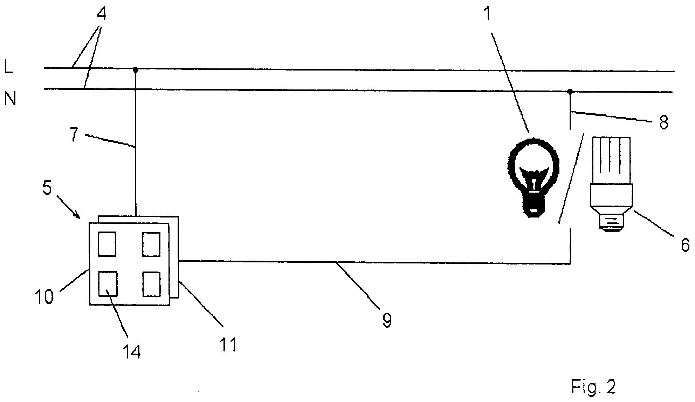

Nachfolgend werden der Aufbau und die Funktionsweise eines elektrischen Installationssystems (Figur 2) unter Verwendung des erfindungsgemäßen Installationsgerätes 5 schematisch anhand von Ausführungsbeispielen näher beschrieben.

Das Installationsgerät 5 eignet sich beispielsweise um das in der Figur 1 dargestellte herkömmliche Installationssystem funktional zu erweitern, so dass wahlweise Lasten 6 mit Vorschaltgerät, z. B. Kompaktleuchtstofflampen, und Lasten 1 ohne Vorschaltgerät, z. B. Glühlampen, betrieben werden können. Hierzu wird lediglich das Installationsgerät 5 an der jeweiligen Bedienstelle ausgetauscht. Das vorhandene 2-adrige Leitungssystem 7, 8, 9 kann unverändert weiter genutzt werden. In der bestehenden Verdrahtung kann eine Ader 7, 8 zur beiderseitigen Spannungsversorgung genutzt werden, während die weitere Ader 9 als Telegramm- und Lastleitung zwischen dem Installationsgerät 5 und der Last 1 dienen kann. Das Installationssystem kann auch im Rahmen einer Erstinstallation realisiert werden. Eine Ergänzung, z. B. durch separate oder zusätzliche Busleitungen, ist nicht notwendig.

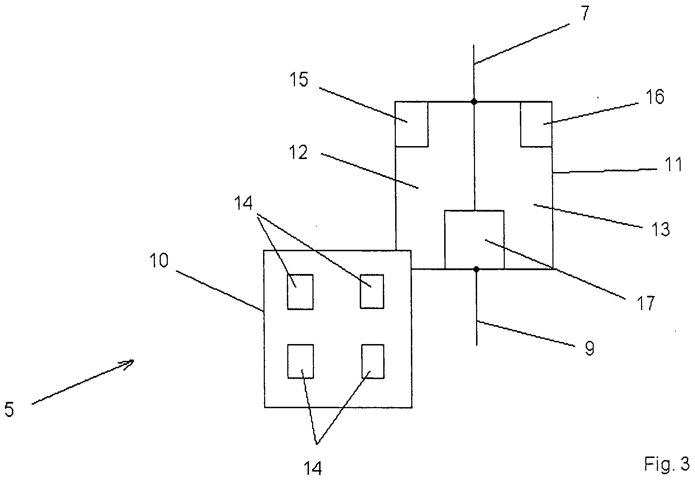

Das Installationsgerät 5 besteht prinzipiell aus einer frontseitigen Bediensensorik 10, einer Montagevorrichtung (nicht dargestellt) und einem rückseitigen Gerätegehäuse 11 (Figur 3). Vorteilhafterweise sind deren Abmessungen an den Standard konventioneller Installationsgeräte angepasst, so dass eine Integration in die vorhandene Gerätesystematik möglich ist. In dem Gerätegehäuse 11 ist je eine Geräteeinheit 12 mit einem Dimmer für eine Last 1 ohne Vorschaltgerät und eine Geräteeinheit 13 zur Dimmung einer Last 6 mit Vorschaltgerät vorhanden. Beide Geräteeinheiten 12, 13 sind mit der Bediensensorik 10 elektrisch verbunden und werden durch sie aktiviert.

Die Bediensensorik 10 ist mechanisch und elektrisch mit dem Gerätesockel lösbar verbunden. Die Bediensensorik 10 beinhaltet die funktionsgemäße Steuerelektronik sowie die Sensorik zur Bedienung des Installationsgerätes 5, beispielsweise Bedienelemente 14 oder drahtlose Schnittstellen (nicht dargestellt), die per Funk- oder Infrarotsignalen bedienbar sind. Die Bediensensorik 10 wird von beiden Geräteeinheiten 12, 13 genutzt, so dass sich hierdurch eine einheitliche Bedienmethodik ergibt. Den Bedienelementen 14 sind feste Funktionalitäten zugeordnet, wie z. B. An, Aus, Auf- oder Abdimmen, Szene, die durch unterschiedlich lange Betätigungen weiter differenziert sind.

Die erste Geräteeinheit 12 umfasst eine Spannungsversorgung und typspezifische elektrische Bauteile in Form eines Dimm-/Schaltmoduls 15 mit integrierter Lastarterkennung für die Ansteuerung einer Last 1 ohne Vorschaltgerät. Die zweite Geräteeinheit 13 weist eine Spannungsversorgung und eine Baugruppe 16 zur Erzeugung eines Telegramms und zur Aufmodulierung des Telegramms auf das Lastsignal auf, z. B. in Form eines Mikroprozessors.

In dem Installationsgerät 5 ist eine Baueinheit 17 für die Wahl der zu nutzenden Geräteeinheit 12, 13 integriert. Dies kann manuell durch den Nutzer mittels eines Schalters erfolgen. In einer komfortablen Ausführung erfolgt dies automatisch, wobei eine Elektronik den angeschlossenen Lasttyp detektiert und automatisch die entsprechende Geräteeinheit 12, 13 für den Betrieb auswählt.

Eine notwendige Energieversorgung des Installationsgerätes 5 erfolgt über das Leitungssystem und die angeschlossene Last 1, 5. Die Energieversorgung erfolgt stetig, vorteilhafterweise auch während der Telegrammübertragung. Die Gestaltung und der Umfang des Telegramms sind so gewählt, dass die benötigte Energiemenge im Bereich von wenigen Milliwatt liegt und jederzeit trotz der angeschlossenen Last 1, 5 abgegriffen werden kann.

In der ersten Geräteeinheit 12 löst eine Bedienaktion innerhalb des Dimm-/Schaltmoduls 15 zunächst eine Lastarterkennung aus, die dann den Betriebsmodus des Dimmers bestimmt. Bei einer Betätigungsaktion wird ein entsprechend geformtes Lastsignal in Form eines analogen Spannungspegels an die Last übertragen und bewirkt eine entsprechende Ansteuerung der Last 1.

In der zweiten Geräteeinheit 13 löst eine Bedienaktion innerhalb der Baugruppe 16 zur Telegrammerzeugung, vorzugsweise unter Nutzung eines Mikroprozessors, eine Generierung digitaler Signale aus, die über die vorhandene Ader 9 als aufmoduliertes Telegramm an ein Dekodiermodul der Last 5 übertragen werden. Dort wird das Telegramm dekodiert und in einem integrierten Dimmmodul in eine definierte Schaltaktion an der Last 5 umgesetzt.

Das Telegramm wird unidirektional in Richtung der empfangenden Last 5 verschickt. Der Informationsgehalt des Telegramms ermöglicht eine eindeutige Auswertung, so dass die angeschlossene Last 5 in beabsichtigter Weise durch das Dimmmodul angesteuert werden kann. Dabei beinhaltet das Telegramm Informationen über das genutzte Bedienelement 14 und die Bediendauer, wobei eine kurze Betätigung beispielsweise ein Einschalten der Last bewirkt, während eine lange Betätigung ein "Hochfahren" der Last bewirkt. An einem anderen Bedienelement 14 kann beispielsweise ein Ausschalten und "Runterfahren" der Last erfolgen.

Die beiden Geräteeinheiten 12, 13 sind körperlich in einem gemeinsamen Gehäuse 11 angeordnet, wobei eine integrale Baugruppe oder auch zwei modulare Baugruppen möglich sind, die lösbar miteinander verbunden sind. Dadurch wird ein Austausch, Ergänzung oder Reparatur von Geräteeinheiten erleichtert.

### Bezugszeichenliste

- 1: Last ohne Vorschaltgerät
- 2: Dimmer
- 4: Spannungsversorgung
- 5: Installationsgerät
- 6: Last mit Vorschaltgerät
- 7: Leitungssystem, Ader
- 8: Leitungssystem, Ader
- 9: Leitungssystem, Ader
- 10: Bediensensorik
- 11: Gerätegehäuse
- 12: erste Geräteeinheit
- 13: zweite Geräteeinheit
- 14: Bedienelement
- 15: Dimm-/Schaltmodul
- 16: Baugruppe
- 17: Baueinheit

## Patentansprüche

1. Elektrisches Installationsgerät (5), umfassend mindestens eine Bediensensorik (10) und eine erste Geräteeinheit (12) mit einem Dimmer für eine Last (1) ohne Vorschaltgerät, mit der ein Lastsignal erzeugbar ist, das abhängig von Eingabesignalen der Bediensensorik (10) ist und mit dem ein Lastzustand der Last (1) regelbar ist, wobei das Installationsgerät (5) in ein zweiadriges Leitungssystem (7, 8, 9) integrierbar ist, durch das das Installationsgerät (5) und die Last (1) elektrisch verbunden sind, wobei eine Ader (7, 8) des Leitungssystems mit einer externen Energieversorgung verbunden ist und eine Ader (9) das Installationsgerät (5) und die Last (1) miteinander verbindet,
**dadurch gekennzeichnet, dass** das Installationsgerät (5) ein gemeinsames Gerätegehäuse (11) aufweist, in dem die erste Geräteeinheit (12) und eine zweite Geräteeinheit (13) mit einem Dimmer für eine Last (6) mit Vorschaltgerät angeordnet sind, mit der ein stetiges Lastsignal und ein Telegramm erzeugbar ist, wobei das Telegramm abhängig von den Eingabesignalen der Bediensensorik (10) ist und auf das Lastsignal aufmodulierbar ist.

2. Elektrisches Installationsgerät nach Patentanspruch 1, **dadurch gekennzeichnet, dass** zwischen den Geräteeinheiten (12, 13) manuell oder automatisch umgeschaltet wird.

3. Elektrisches Installationsgerät nach einem der vorhergehenden Patentansprüche, **dadurch gekennzeichnet, dass** der Lasttyp der angeschlossenen Last (1, 6) in dem elektrischen Installationsgerät (5) automatisch detektierbar ist.

4. Elektrisches Installationsgerät nach einem der vorhergehenden Patentansprüche, **dadurch gekennzeichnet, dass** die erste Geräteeinheit (12) automatisch eine Lastarterkennung zwischen kapazitiven, induktiven und ohmschen Lasten (1) vornimmt und die Geräteeinheit (12) in dem geeigneten Lastartmodus betreibt.

5. Elektrisches Installationsgerät nach einem der vorhergehenden Patentansprüche, **dadurch gekennzeichnet, dass** mit der zweiten Geräteeinheit (13) eine Last (6) mit einem Dekodierer und einer Dimmeinheit ansteuerbar ist, die das Lastsignal dekodieren und die Last ansteuern.

6. Elektrisches Installationsgerät nach einem der Ansprüche 1 bis 5, **dadurch gekennzeichnet, dass** die Geräteeinheiten (12, 13) als eine einzige Baugruppe ausgebildet sind.

7. Elektrisches Installationsgerät nach einem der Ansprüche 1 bis 5, **dadurch gekennzeichnet, dass** die Geräteeinheiten (12, 13) als separate Baugruppen ausgebildet sind.

8. Elektrisches Installationsgerät nach einem der Ansprüche 1 bis 7, **dadurch gekennzeichnet, dass** die Geräteeinheiten (12, 13) lösbar miteinander verbunden sind.

9. Elektrisches Installationsgerät nach einem der vorhergehenden Patentansprüche, **dadurch gekennzeichnet, dass** die Bediensensorik (10) lösbar mit dem Gerätegehäuse (11) verbunden ist.

10. Elektrisches Installationsgerät nach Anspruch 9, **dadurch gekennzeichnet, dass** die Bediensensorik (10) drahtlos mit den Geräteeinheiten (12, 13) kommuniziert.

## Claims

1. An electrical installation device (5) comprising at least one operating sensor system (10) and a first device unit (12) which has a dimmer for a load (1) without a ballast and by which a load signal can be produced which is dependent on input signals of the operating sensor system (10) and by which a load state of the load (1) can be regulated, wherein the installation device (5) can be integrated into a two-core line system (7, 8, 9) by which the installation device (5) and the load (1) are electrically connected, wherein one core (7, 8) of the line system is connected to an external energy supply and one core (9) connects the installation device (5) and the load (1) to one another,
**characterized in that** the installation device (5) has a common device housing (11) in which the first device unit (12) and a second device unit (13) which has a dimmer for a load (6) with a ballast (6) are arranged, with a constant load signal and a telegram being able to be produced by said second device unit, wherein the telegram is dependent on the input signals of the operating sensor system (10) and is able to be modulated onto the load signal.

2. An electrical installation device in accordance with claim 1, **characterized in that** a switchover between the device units (12, 13) is carried out manually or automatically.

3. An electrical installation device in accordance with one of the preceding claims, **characterized in that** the load type of the connected load (1, 6) can be detected automatically in the electrical installation device (5).

4. An electrical installation device in accordance with any one of the preceding claims, **characterized in that** the first device unit (12) automatically carries out a load type recognition between capacitive, inductive and ohmic loads (1) and operates the device unit (12) in the suitable load type mode.

5. An electrical installation device in accordance with any one of the preceding claims, **characterized in that** a load (6) can be controlled by the second device unit (13) using a decoder and a dimming unit which decode the load signal and control the load.

6. An electrical installation device in accordance with any one of the claims 1 to 5, **characterized in that** the device units (12, 13) are configured as a single assembly.

7. An electrical installation device in accordance with any one of the claims 1 to 5, **characterized in that** the device units (12, 13) are configured as separate assemblies.

8. An electrical installation device in accordance with any one of the claims 1 to 7, **characterized in that** the device units (12, 13) are releasably connected to one another.

9. An electrical installation device in accordance with any one of the preceding claims, **characterized in that** the operating sensor system (10) is releasably connected to the device housing (11).

10. An electrical installation device in accordance with claim 9, **characterized in that** the operating sensor system (10) communicates with the device units (12, 13) in a wireless manner.

## Revendications

1. Appareil d'installation électrique (5) comportant au moins une unité sensorielle de manipulation (10) et une première unité d'appareil (12) pourvue d'un variateur de tension pour une charge (1) sans ballast, permettant de générer un signal de charge qui dépend de signaux d'entrée de l'unité sensorielle de manipulation (10) et permettant de réguler un état de charge de la charge (1), dans lequel l'appareil d'installation (5) est apte à être intégré dans un système de ligne à deux fils (7, 8, 9) par lequel l'appareil d'installation (5) et la charge (1) sont connectés électriquement, un fil (7, 8) du système de ligne étant connecté à une alimentation en énergie externe et un fil (9) reliant l'appareil d'installation (5) et la charge (1) l'un à l'autre,
**caractérisé en ce que**
l'appareil d'installation (5) comprend un boîtier d'appareil commun (11) dans lequel sont agencées la première unité d'appareil (12) et une seconde unité d'appareil (13) comprenant un variateur de tension pour une charge (6) avec ballast, permettant de générer un signal de charge constant et un télégramme, le télégramme dépendant des signaux d'entrée de l'unité sensorielle de manipulation (10) et pouvant être modulé sur le signal de charge.

2. Appareil d'installation électrique selon la revendication 1, **caractérisé en ce que** la commutation entre les unités d'appareil (12, 13) est manuelle ou automatique.

3. Appareil d'installation électrique selon l'une des revendications précédentes, **caractérisé en ce que** le type de charge de la charge branchée (1, 6) dans l'appareil d'installation électrique (5) est détectable automatiquement.

4. Appareil d'installation électrique selon l'une des revendications précédentes, **caractérisé en ce que** la première unité d'appareil (12) procède automatiquement à une détection de type de charge parmi des charges capacitives, inductives et résistives et fait fonctionner l'unité d'appareil (12) dans le mode de type de charge approprié.

5. Appareil d'installation électrique selon l'une des revendications précédentes, **caractérisé en ce que** la seconde unité d'appareil (13) permet de piloter une charge (6) avec un décodeur et une unité de variation de tension qui décodent le signal de charge et qui pilotent la charge.

6. Appareil d'installation électrique selon l'une des revendications 1 à 5, **caractérisé en ce que** les unités d'appareil (12, 13) sont réalisées sous la forme d'un seul groupe structurel.

7. Appareil d'installation électrique selon l'une des revendications 1 à 5, **caractérisé en ce que** les unités d'appareil (12, 13) sont réalisées sous la forme de groupes structurels séparés.

8. Appareil d'installation électrique selon l'une des revendications 1 à 7, **caractérisé en ce que** les unités d'appareil (12, 13) sont reliées de façon détachable l'une à l'autre.

9. Appareil d'installation électrique selon l'une des revendications précédentes, **caractérisé en ce que** l'unité sensorielle de manipulation (10) est reliée de façon détachable au boîtier d'appareil (11).

10. Appareil d'installation électrique selon la revendication 9, **caractérisé en ce que** l'unité sensorielle de manipulation (10) communique sans fil avec les unités d'appareil (12, 13).
